(19) Europäisches Patentamt
European Patent Office
Office européen des brevets

(11) **EP 3 301 910 A1**

(12) **EUROPEAN PATENT APPLICATION**

(43) Date of publication:
**04.04.2018 Bulletin 2018/14**

(51) Int Cl.:
**H04N 9/73** $^{(2006.01)}$   **H04N 1/60** $^{(2006.01)}$

(21) Application number: **16191391.8**

(22) Date of filing: **29.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Continental Automotive GmbH**
  **30165 Hannover (DE)**
• **Conti Temic Microelectronic GmbH**
  **90411 Nürnberg (DE)**

(72) Inventors:
• **Kulkarni, Milind**
  **560054 Yelahanka-Bangalore (IN)**
• **Ulveland, Lars**
  **88085 Langenargen (DE)**
• **Ray, Lopamudra**
  **560068 Bangalore (IN)**
• **Pathayapurakkal, Anoop**
  **560037 Bangalore (IN)**

(74) Representative: **Reuter, Andreas**
  **Conti Temic microelectronic GmbH**
  **Intellectual Property**
  **Sieboldstraße 19**
  **90411 Nürnberg (DE)**

(54) **DEVICE FOR WHITE BALANCE CORRECTION**

(57) The present invention relates to a device (10) for white balance correction. It is described to provide (210) a first image of at least one image. A region of interest within the first image is determined (220). A first green to red parameter (1GR) is determined (240) on the basis of pixel values within the region of interest within the first image. A first green to blue parameter (1GB) is determined (250) on the basis of pixel values within the region of interest within the first image. A second image of the at least one image is provided (260), the second image acquired at a different time to a time of acquisition of the first image. A region of interest within the second image is determined (270). A second green to red parameter (2GR) is determined (290) on the basis of pixel values within the region of interest within the first image and within the region of interest within the second image. A second green to blue parameter (2GB) is determined (300) on the basis of pixel values within the region of interest within the first image and within the region of interest within the second image. A white balance correction is determined (310) on the basis of: the first green to red parameter; and the first green to blue parameter; and the second green to red parameter; and the second green to blue parameter.

Fig. 2

**Description**

FIELD OF THE INVENTION

The present invention relates to a device for white balance correction, to a system for white balance correction, to a method for white balance correction, as well as to a computer program element.

BACKGROUND OF THE INVENTION

The general background of this invention is the field of the correction of white balance in automotive cameras. White balance is the process of removing unrealistic colour casts, so that objects which appear white in person are rendered white in a photograph. Correct camera white balance has to take into account the "colour temperature" of the light source, which refers to the relative warmth or coolness of white light. Colour temperature is a way of measuring the quality of the light source. A light of higher colour temperature has "more" blue content that light with a lower colour temperature. Setting white balance for a camera incorrectly can cause a colour shift in the image. A camera that is set up for a colour temperature associated with that of sunlight when taking an image of an indoor environment illuminated mainly by incandescent lights, will result in an image that is reddish or yellowish. Conversely, a camera that is set up for a colour temperature associated with an indoor environment illuminated mainly buying condition lights when taking an image of an outdoor environment lit by sunlight, will result in a blueish image. Automotive cameras must deal with nonuniform environments and with different lighting conditions, which is problematic when determining a white balance correction.

SUMMARY OF THE INVENTION

It would be advantageous to have improved apparatus for white balance correction.
The object of the present invention is solved with the subject matter of the independent claims, wherein further embodiments are incorporated in the dependent claims. It should be noted that the following described aspects and examples of the invention apply also for the device for white balance correction, the system for white balance correction, the method for white balance correction, and for the computer program element.
According to a first aspect, there is provided a device for white balance correction, comprising:

- an input unit; and
- a processing unit;

The input unit is configured to provide the processing unit with at least one image, the at least one image comprising a first image and a second image acquired at a different time to a time of acquisition of the first image. The processing unit is configured to determine a region of interest within the first image. The processing unit is also configured to determine a first green to red parameter (1GR) on the basis of pixel values within the region of interest within the first image. The processing unit is configured to determine a first green to blue parameter (1GB) on the basis of pixel values within the region of interest within the first image. The processing unit is also configured to determine a region of interest within the second image. The processing unit is configured to determine a second green to red parameter (2GR) on the basis of pixel values within the region of interest within the first image and within the region of interest within the second image. The processing unit is also configured to determine a second green to blue parameter (2GB) on the basis of pixel values within the region of interest within the first image and within the region of interest within the second image. The processing unit is configured to determine a white balance correction on the basis of: the first green to red parameter; and the first green to blue parameter; and the second green to red parameter; and the second green to blue parameter.
In this manner, historical information is used in order to provide white balance correction using a region of interest in image fields.
In an example, the processing unit is configured to determine an average value for a distribution of the colour red within the region of interest within the first image. The processing unit is also configured to determine an average value for a distribution of the colour blue within the region of interest within the first image. The processing unit is also configured to determine an average value for a distribution of the colour green within the region of interest within the first image. The processing unit is configured to determine the first green to red parameter (1GR) as a function of the average value for the distribution of the colour green within the region of interest within the first image and the average value for the distribution of the colour red within the region of interest within the first image. The processing unit is configured to determine the first green to blue parameter (1GB) as a function of the average value for the distribution of the colour green within the region of interest within the first image and the average value for the distribution of the colour blue within the region of interest within the first image. The processing unit is configured to determine an average value for a distribution of the colour red within the region of interest within the second image. The processing unit is also configured to determine an average value for a distribution of the colour blue within the region of interest within the second image. The processing unit is also configured to determine an average value for a distribution of the colour green within the region of interest within the second image. The processing unit is configured to determine the second green to red parameter (2GR) as a function of the average value for the distribution of the colour green within the region of interest within the first image and the average value for the distribution of the colour red within the region of interest within the first image and the average value for the distribution of the colour green within the region of interest within the second image and the average value for a distribution of the colour red within the region of interest within the second image. The processing unit is also configured to determine the second green to blue parameter (2GB) as a function of the average value for the distribution of the colour green within the region of interest within the first image and the average value for the distribution of the colour blue within the region of interest within the first image and the average value for the distribution of the colour green within the region of interest within the second image and the average value for a distribution of the colour blue within the region of interest within the second image.

Thus average values of red, green and blue distributions are used in image fields in order to provide white balance correction, providing computational robustness.

In an example, the processing unit is configured to determine the first green to red parameter (1GR) as a function of the ratio between the average value for the distribution of the colour green within the region of interest within the first image and the average value for the distribution of the colour red within the region of interest within the first image. The processing unit is also configured to determine the first green to blue parameter (1GB) as a function of the ratio between the average value for the distribution of the colour green within the region of interest within the first image and the average value for the distribution of the colour blue within the region of interest within the first image.

In other words, within an acquired image the ratio of the (Avg G / Avg R) and ratio of (Avg G / Avg B) can be used to provide a white balance correction. Thus for the situation where a camera in a car has acquired imagery, the two images are of slightly displaced images of sections of roads. In this manner, a computationally efficient way of effecting a white balance correction is provided that accounts for road non-uniformities, and takes into account effects such as muddy road surfaces, road markings etc. In this manner, a computationally efficient way of effecting a white balance correction is provided.

In an example, the white balance correction comprises a green to red ratio correction determined on the basis of the first green to red parameter and the second green to red parameter, and wherein the white balance correction comprises a green to blue ratio correction determined on the basis of the first green to blue parameter and the second green to blue parameter.

In other words, the different colour channels of a camera can be corrected with different corrections in order to provide for white balance correction.

In an example, the second green to red parameter is determined as a function of the ratio of a first value to a second value. The first value is calculated as the sum of: the average value for the distribution of the colour green within the region of interest within the second image plus the average value for the distribution of the colour red within the region of interest within the first image minus the average value for the distribution of the colour green within the region of interest within the first image minus the average value for the distribution of the colour red within the region of interest within the second image. The second value is calculated as the sum of: the average value for the distribution of the colour red within the region of interest within the first image and the average value for the distribution of the colour red within the region of interest within the second image. The second green to blue ratio is parameter is determined as a function of the ratio of a third value to a fourth value. The third value is calculated as the sum of: the average value for the distribution of the colour green within the region of interest within the second image plus the average value for the distribution of the colour blue within the region of interest within the first image minus the average value for the distribution of the colour green within the region of interest within the first image minus the average value for the distribution of the colour blue within the region of interest within the second image. The fourth value is calculated as the sum of: the average value for the distribution of the colour blue within the region of interest within the first image and the average value for the distribution of the colour blue within the region of interest within the second image.

In an example, the processing unit is configured to determine whether there are a plurality of Lombs of the colour red within the region of interest within the first image and wherein the processing unit is configured to determine the average value for the distribution of the colour red for a predominant Lomb of the plurality of Lombs. Additionally or alternatively the processing unit is configured to determine whether there are a plurality of Lombs of the colour blue within the region of interest within the first image and wherein the processing unit is configured to determine the average value for the distribution of the colour blue for a predominant Lomb of the plurality of Lombs. Additionally or alternatively the processing unit is configured to determine whether there are a plurality of Lombs of the colour green within the region of interest within the first image and wherein the processing unit is configured to determine the average value for the distribution of the colour green for a predominant Lomb of the plurality of Lombs.

In other words, there can be two (or more) red colour distributions within the region of interest, and/or two (or more) green distributions within the region of interest, and/or two (or more) blue distributions within the region of interest. However, when there is more than one distribution for a particular colour, only the predominant distribution is analysed. This provides for the ability to account for non-uniformities in the road surface within an image frame, due for example to a marker on the road or a sign on the road.

In an example, the processing unit 30 is configured to determine a global region within the first image and configured to sub-divide the global region into a plurality of sub-regions. The processing unit is also configured to determine an average value for a distribution of the colour red within each of the plurality of sub-regions within the first image. The processing unit is also configured to determine an average value for a distribution of the colour blue within each of the plurality of sub-regions within the first image. The processing unit is also configured to determine an average value for a distribution of the colour green within each of the plurality of sub-regions within the first image. The processing unit is configured to use the average value for the distribution of the colour red within each of the plurality of sub-regions within the first image and/or the average value for a distribution of the colour blue within each of the plurality of sub-regions within the first image and/or the average value for the distribution of the colour green within each of the plurality of sub-regions within the first image to determine if any of the plurality of sub-regions are outlier regions. The processing unit is configured to determine the region of interest in the first image as the plurality of sub-regions in the first image minus the outlier regions in the first image.

In other words, the image scene is divided into a grid and grid segments that have colour characteristics statistically different to that of the other segments are discarded. This means that the processing is more accurate, because outlier image sections are not considered.

In this manner, a computationally efficient manner is provided for determining a region of interest excluding the outliers.

In an example, the processing unit 30 is configured to determine a global region within the second image and configured to sub-divide the global region into a plurality of sub-regions. The processing unit is configured to determine an average value for a distribution of the colour red within each of the plurality of sub-regions within the second image. The processing unit is also configured to determine an average value for a distribution of the colour blue within each of the plurality of sub-regions within the second image. The processing unit is also configured to determine an average value for a distribution of the colour green within each of the plurality of sub-regions within the second image. The processing unit is configured to use the average value for the distribution of the colour red within each of the plurality of sub-regions within the second image and/or the average value for a distribution of the colour blue within each of the plurality of sub-regions within the second image and/or the average value for the distribution of the colour green within each of the plurality of sub-regions within the second image to determine if any of the plurality of sub-regions are outlier regions. The processing unit is configured to determine the region of interest in the second image as the plurality of sub-regions in the second image minus the outlier regions in the second image.

In other words, the image scene is divided into a grid and grid segments that have colour characteristics statistically different to that of the other segments are discarded. This means that the processing is more accurate, because outlier image sections are not considered.

In an example, the region of interest within the first image extends over substantially the same pixel positions as the region of interest within the second image.

In other words, the region of interest can be a fixed region within a frame, such that as a car moves forward between image acquisitions different parts of the road are imaged in the two images. This provides for computational simplicity, as image processing is not required in order to determine appropriate regions of interest.

In an example, the region of interest within the first image and the region of interest within the second image represent reference white point objects.

In other words, reference white point objects within image frames are used to determine the white balance correction.

According to a second aspect, there is provided a system 110 for white balance correction, the system comprising:

- at least one camera; and
- a device for white balance correction according to the first aspect.

A camera of the at least one camera is configured to acquire the at least one image. The processing unit is configured to apply the white balance correction to the at least one camera.

In this manner, a feedback system is provided where a camera from acquired imagery can generate a white balance correction that is applied to itself and to other cameras on the system.

According to a third aspect, there is provided a method for white balance correction, comprising:

a) providing a first image of at least one image;

e) determining a region of interest within the first image;

h) determining a first green to red parameter (1GR) on the basis of pixel values within the region of interest within the first image;

i) determining a first green to blue parameter (1GB) on the basis of pixel values within the region of interest within the first image;

j) providing a second image of the at least one image, the second image acquired at a different time to a time of acquisition of the first image;

n) determining a region of interest within the second image;

q) determining a second green to red parameter (2GR) on the basis of pixel values within the region of interest within the first image and within the region of interest within the second image;

r) determining a second green to blue parameter (2GB) on the basis of pixel values within the region of interest within the first image and within the region of interest within the second image; and

s) determining a white balance correction on the basis of: the first green to red parameter; and the first green to blue parameter; and the second green to red parameter; and the second green to blue parameter.

In an example, the method comprises:

g) determining an average value for a distribution of the colour red within the region of interest within the first image, and an average value for a distribution of the colour blue within the region of interest within the first image, and an average value for a distribution of the colour green within the region of interest within the first image;

wherein step h) comprises determining the first green to red parameter (1GR) as a function of the average value for the distribution of the colour green within the region of interest within the first image and the average value for the distribution of the colour red within the region of interest within the first image;

wherein step i) comprises determining the first green to blue parameter (1GB) as a function of the average value for the distribution of the colour green within the region of interest within the first image and the average value for the distribution of the colour blue within the region of interest within the first image;

p) determining an average value for a distribution of the colour red within the region of interest within the second image, and an average value for a distribution of the colour blue within the region of interest within the second image, and an average value for a distribution of the colour green within the region of interest within the second image;

wherein step q) comprises determining the second green to red parameter (2GR) as a function of the average value for the distribution of the colour green within the region of interest within the first image and the average value for the distribution of the colour red within the region of interest within the first image and the average value for the distribution of the colour green within the region of interest within the second image and the average value for a distribution of the colour red within the region of interest within the second image; and

wherein step r) comprises determining the second green to blue parameter (2GB) as a function of the average value for the distribution of the colour green within the region of interest within the first image and the average value for the distribution of the colour blue within the region of interest within the first image and the average value for the distribution of the colour green within the region of interest within the second image and the average value for a distribution of the colour blue within the region of interest within the second image.

In an example, step h) comprises determining the first green to red parameter (1GR) as a function of the ratio between the average value for the distribution of the colour green within the region of interest within the first image and the average value for the distribution of the colour red within the region of interest within the first image; and step i) comprises determining the first green to blue parameter (1GB) as a function of the ratio between the average value for the distribution of the colour green within the region of interest within the first image and the average value for the distribution of the colour blue within the region of interest within the first image.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for white balance correction;
Fig. 2 shows a schematic set up of an example of a system for white balance correction;
Fig. 3 shows a method for white balance correction;
Fig. 4 shows a schematic example of an implementation of an example of a device for white balance correction;
Fig. 5 shows an example of a detailed workflow of a method for white balance correction;
Fig. 6 shows examples of colour distributions from different road environments;
Fig. 7 shows an example of an image of road region divided into sub-regions;
Fig. 8 shows single colour distributions for two different sub-regions of Fig. 6;
Fig. 9 shows a schematic representation of a car with a camera viewing road regions of interest.

DETAILED DESCRIPTION OF EMBODIMENTS

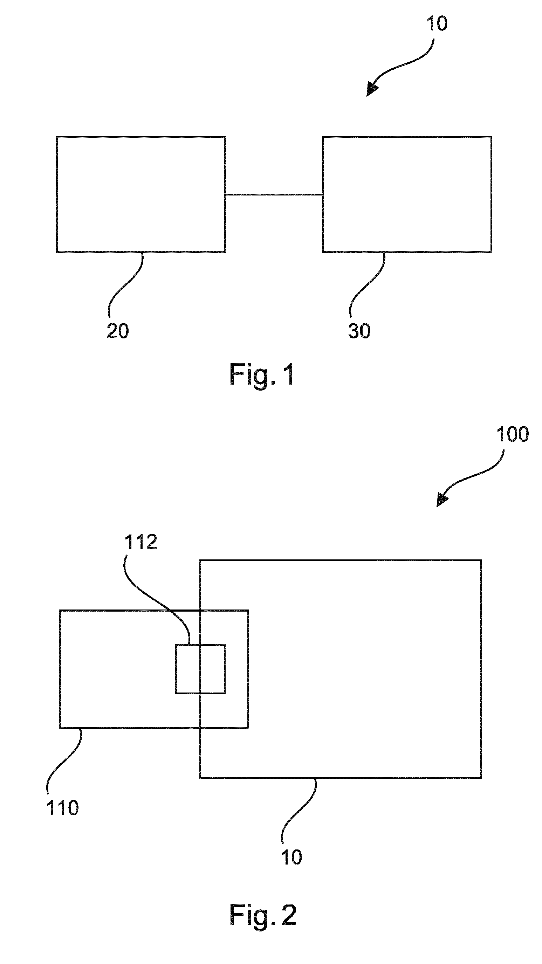

Fig. 1 shows an example of a device 10 for white balance correction. The device 10 comprises an input unit 20, and a processing unit 30. The input unit 20 is configured to provide the processing unit 30 with at least one image. The at least one image comprises a first image and a second image acquired at a different time to a time of acquisition of the first image. The processing unit 30 is configured to determine a region of interest within the first image. The processing unit 30 is also configured to determine a first green to red parameter (1GR) on the basis of pixel values within the region of interest within the first image. The processing unit 30 is also configured to determine a first green to blue parameter (1GB) on the basis of pixel values within the region of interest within the first image. The processing unit 30 is configured to determine a region of interest within the second image. The processing unit 30 is also configured to determine a second green to red parameter (2GR) on the basis of pixel values within the region of interest within the first image and within the region of interest within the second image. The processing unit 30 is configured to determine a second green to blue parameter (2GB) on the basis of pixel values within the region of interest within the first image and within the region of interest within the second image. The processing unit 30 is also configured to determine a white balance correction on the basis of: the first green to red parameter; and the first green to blue parameter; and the second green to red parameter; and the second green to blue parameter.

In an example, the difference in time between the first image and second image is equal to the time between consecutive frames of a camera used to view the scene. For example, for a typical ADAS camera with a frame rate of 15 frames per second, the time between the first and second images can be 67ms. Cameras can operate at other frame rates, such that the time between images can be different to this, for example 33ms for a camera operating at a frame rate of 30 frames per second, 100ms for a camera operating at a frame rate of 10 frames per second, 20ms for a camera operating at a frame rate of 50 frames per second.

In an example, the difference in time between the first image and second image is equal to the time between next but one frames of a camera used to view the scene, in other words image frames separated by an image frame. In this way, if an image frame is unsuitable for processing, for example the processing unit has determined that image saturation has occurred, then that image can be discarded and the next image used. For example, for a typical ADAS camera with a frame rate of 15 frames per second, the time between the first and second images can be 133ms. Cameras can operate at other frame rates, such that the time between images can be different to this, for example 67ms for a camera operating at a frame rate of 30 frames per second, 200ms for a camera operating at a frame rate of 10 frames per second, 40ms for a camera operating at a frame rate of 50 frames per second.

In an example, determining the first green to red parameter (1GR) on the basis of pixel values within the region of interest within the first image comprises representing pixels values in the form of a histogram. In an example, determining the first green to blue parameter (1GB) on the basis of pixel values within the region of interest within the first image comprises representing pixels values in the form of a histogram. In an example, determining a second green to red parameter (2GR) on the basis of pixel values within the region of interest within the first image and within the region of interest within the second image comprises representing pixel values in the first image in the form of a histogram and representing pixel values in the second image in the form of a histogram. In an example, determining a second green to blue parameter (2GB) on the basis of pixel values within the region of interest within the first image and within the region of interest within the second image comprises representing pixel values in the first image in the form of a histogram and representing pixel values in the second image in the form of a histogram. This provides for efficient processing.

According to an example, the processing unit 30 is configured to determine an average value for a distribution of the colour red within the region of interest within the first image. The processing unit 30 is also configured to determine an average value for a distribution of the colour blue within the region of interest within the first image. The processing unit 30 is also configured to determine an average value for a distribution of the colour green within the region of interest within the first image. The processing unit 30 is configured to determine the first green to red parameter (1GR) as a function of the average value for the distribution of the colour green within the region of interest within the first image and the average value for the distribution of the colour red within the region of interest within the first image. The processing unit 30 is also configured to determine the first green to blue parameter (1GB) as a function of the average value for the distribution of the colour green within the region of interest within the first image and the average value for the distribution of the colour blue within the region of interest within the first image. The processing unit 30 is configured to determine an average value for a distribution of the colour red within the region of interest within the second image. The processing unit 30 is also configured to determine an average value for a distribution of the colour blue within the region of interest within the second image. The processing unit 30 is also configured to determine an average value for a distribution of the colour green within the region of interest within the second image. The processing unit 30 is configured to determine the second green to red parameter (2GR) as a function of: the average value for the distribution of the colour green within the region of interest within the first image; and the average value for the distribution of the colour red within the region of interest within the first image; and the average value for the distribution of the colour green within the region of interest within the second image; and the average value for a distribution of the colour red within the region of interest within the second image. The processing unit 30 is configured to determine the second green to blue parameter (2GB) as a function of: the average value for the distribution of the colour green within the region of interest within the first image; and the average value for the distribution of the colour blue within the region of interest within the first image; and the average value for the distribution of the colour green within the region of interest within the second image; and the average value for a distribution of the colour blue within the region of interest within the second image.

According to an example, the processing unit 30 is configured to determine the first green to red parameter (1GR) as a function of the ratio between the average value for the distribution of the colour green within the region of interest within the first image and the average value for the distribution of the colour red within the region of interest within the first image. The processing unit 30 is also configured to determine the first green to blue parameter (1GB) as a function of the ratio between the average value for the distribution of the colour green within the region of interest within the first image and the average value for the distribution of the colour blue within the region of interest within the first image.

In an example, the distribution for the colour red comprises a red colour histogram. In an example, the distribution for the colour green comprises a green colour histogram. In an example, the distribution for the colour blue comprises a blue colour histogram. In an example the histogram, for a particular colour (red, green, or blue) comprises the number of pixels having a particular pixel count (equivalent grey count level).

In an example, the first region of interest comprises imagery of a part of a road surface. In an example, the second region of interest comprises imagery of a part of the road surface.

According to an example, the white balance correction comprises a green to red ratio correction determined on the basis of the first green to red parameter and the second green to red parameter. The white balance correction also comprises a green to blue ratio correction determined on the basis of the first green to blue parameter and the second green to blue parameter.

In an example, the green to red ratio correction comprises a change in values of the red channel, whilst values for the green channel are held constant. In an example, the green to blue ratio correction comprises a change in values of the blue channel, whilst values for the green channel are held constant. In an example, the green to red ratio correction comprises a change in values of the green channel, whilst values for the red channel are held constant. In an example, the green to blue ratio correction comprises a change in values of the green channel, whilst values for the blue channel are held constant. In an example, the green to red ratio correction comprises a change in values of the red channel and the green channel. In an example, the green to blue ratio correction comprises a change in values of the blue channel and the green channel.

According to an example, the second green to red parameter is determined as a function of the ratio of a first value to a second value. The first value is calculated as the sum of: the average value for the distribution of the colour green within the region of interest within the second image plus the average value for the distribution of the colour red within the region of interest within the first image minus the average value for the distribution of the colour green within the region of interest within the first image minus the average value for the distribution of the colour red within the region of interest within the second image. The second value is calculated as the sum of: the average value for the distribution of the colour red within the region of interest within the first image and the average value for the distribution of the colour red within the region of interest within the second image. The second green to blue ratio is parameter is determined as a function of the ratio of a third value to a fourth value. The third value is calculated as the sum of: the average value for the distribution of the colour green within the region of interest within the second image plus the average value for the distribution of the colour blue within the region of interest within the first image minus the average value for the distribution of the colour green within the region of interest within the first image minus the average value for the distribution of the colour blue within the region of interest within the second image. The fourth value is calculated as the sum of: the average value for the distribution of the colour blue within the region of interest within the first image and the average value for the distribution of the colour blue within the region of interest within the second image.

In an example, the green to red ratio correction is equal to the value 1 + 1 GR + 2GR; and wherein the green to blue ratio correction is equal to the value 1 + 1 GB + 2GB.

In an example, the green to red ratio correction is applied according to the following formula:

$$Ratio_{GR} = \frac{Avg\ G}{Avg\ R} = 1 + \frac{\Delta_{pc}^{GR}}{(C_p^R + C_C^R)} + \frac{C_C^G}{C_C^R}$$

In an example, the green to red ratio correction is applied according to the following formula:

$$Ratio_{GB} = \frac{Avg\ G}{Avg\ B} = 1 + \frac{\Delta_{pc}^{GB}}{(C_p^B + C_C^B)} + \frac{C_C^G}{C_C^B}$$

According to an example, the processing unit 30 is configured to determine whether there are a plurality of Lombs of the colour red within the region of interest within the first image. The processing unit 30 is configured to determine the average value for the distribution of the colour red for a predominant Lomb of the plurality of Lombs. Additionally or alternatively the processing unit 30 is configured to determine whether there are a plurality of Lombs of the colour blue within the region of interest within the first image. The processing unit is configured to determine the average value for the distribution of the colour blue for a predominant Lomb of the plurality of Lombs. Additionally or alternatively the processing unit 30 is configured to determine whether there are a plurality of Lombs of the colour green within the region of interest within the first image. The processing unit 30 is configured to determine the average value for the distribution of the colour green for a predominant Lomb of the plurality of Lombs.

In an example, the processing unit is configured to determine whether there are a plurality of Lombs of the colour red within the region of interest within the second image and wherein the processing unit is configured to determine the average value for the distribution of the colour red for a predominant Lomb of the plurality of Lombs; and/or wherein the processing unit is configured to determine whether there are a plurality of Lombs of the colour blue within the region of interest within the second image and wherein the processing unit is configured to determine the average value for the distribution of the colour blue for a predominant Lomb of the plurality of Lombs; and/or wherein the processing unit is configured to determine whether there are a plurality of Lombs of the colour green within the region of interest within the second image and wherein the processing unit is configured to determine the average value for the distribution of the colour green for a predominant Lomb of the plurality of Lombs.

According to an example, the processing unit 30 is configured to determine a global region within the first image and configured to sub-divide the global region into a plurality of sub-regions. The processing unit 30 is configured to determine an average value for a distribution of the colour red within each of the plurality of sub-regions within the first image. The processing unit 30 is configured to determine an average value for a distribution of the colour blue within each of the plurality of sub-regions within the first image. The processing unit 30 is configured to determine an average value for a distribution of the colour green within each of the plurality of sub-regions within the first image. The processing unit 30 is configured to use the average value for the distribution of the colour red within each of the plurality of sub-regions within the first image and/or the average value for a distribution of the colour blue within each of the plurality of sub-regions within the first image and/or the average value for the distribution of the colour green within each of the plurality of sub-regions within the first image to determine if any of the plurality of sub-regions are outlier regions. The processing unit 30 is configured to determine the region of interest in the first image as the plurality of sub-regions in the first image minus the outlier regions in the first image.

In an example, the processing unit is configured to determine a first green to red qualifier for each of the plurality of sub-regions within the first image and configured to determine a first green to blue qualifier for each of the plurality of sub-regions within the first image, and determine an average value and standard deviation for the plurality of first green to red qualifiers and determine an average value and standard deviation for the plurality of first green to blue qualifiers, and configured to use the average values and standard deviations to determine if any of the plurality of sub-regions are outlier regions.

In an example, the first green to red qualifier for a sub-region is calculated as the average value for the distribution of the colour green with that sub-region minus the average value for the distribution of the colour red with that sub-region. In an example, the first green to blue qualifier for a sub-region is calculated as the average value for the distribution of the colour green with that sub-region minus the average value for the distribution of the colour blue with that sub-region.

According to an example, the processing unit 30 is configured to determine a global region within the second image and configured to sub-divide the global region into a plurality of sub-regions. The processing unit 30 is configured to determine an average value for a distribution of the colour red within each of the plurality of sub-regions within the second image. The processing unit 30 is configured to determine an average value for a distribution of the colour blue within each of the plurality of sub-regions within the second image. The processing unit 30 is configured to determine an average value for a distribution of the colour green within each of the plurality of sub-regions within the second image. The processing unit 30 is configured to use the average value for the distribution of the colour red within each of the plurality of sub-regions within the second image and/or the average value for a distribution of the colour blue within each of the plurality of sub-regions within the second image and/or the average value for the distribution of the colour green within each of the plurality of sub-regions within the second image to determine if any of the plurality of sub-regions are outlier regions. The processing unit 30 is configured to determine the region of interest in the second image as the plurality of sub-regions in the second image minus the outlier regions in the second image.

In an example, the processing unit is configured to determine a second green to red qualifier for each of the plurality of sub-regions within the second image and configured to determine a second green to blue qualifier for each of the plurality of sub-regions within the second image, and determine an average value and standard deviation for the plurality of second green to red qualifiers and determine an average value and standard deviation for the plurality of second green to blue qualifiers, and configured to use the average values and standard deviations to determine if any of the plurality of sub-regions are outlier regions.

In an example, the second green to red qualifier for a sub-region is calculated as the average value for the distribution of the colour green with that sub-region minus the average value for the distribution of the colour red with that sub-region. In an example, the second green to blue qualifier for a sub-region is calculated as the average value for the distribution of the colour green with that sub-region minus the average value for the distribution of the colour blue with that sub-region.

In other words, in an example white balance correction is based on the standard deviation variation of (avgG-avgR) and (avgG-avgB) Grid segment computed in the range of thresholds computed from colour histograms of individual segments, with this used to exclude outlier areas from being further processed.

According to an example, the region of interest within the first image extends over substantially the same pixel positions as the region of interest within the second image.

According to an example, the region of interest within the first image and the region of interest within the second image represent reference white point objects.

Fig. 2 shows an example of a system 100 for white balance correction. The system 100 comprises at least one camera 110, and a device 10 for white balance correction as described with respect to any of the examples discussed in relation to Fig. 1. A camera 112 of the at least one camera 110 is configured to acquire the at least one image. The processing unit 30 is configured to apply the white balance correction to the at least one camera 110.

In an example, the system is mounted within an automobile - in this manner improved white balance correction is provided that takes into account road and illumination non-uniformities. In an example, the system is mounted within an aircraft in this manner a better scene understanding is provided. In an example, the system is used for an inspection system - in this manner better defect detection and analysis is provided because of improved white balance correction. In an example, the system is used within a mobile camera, for example within a smartphone - in this manner better captured picture user experience is provided.

In an example, the camera 112 is the input unit 20.

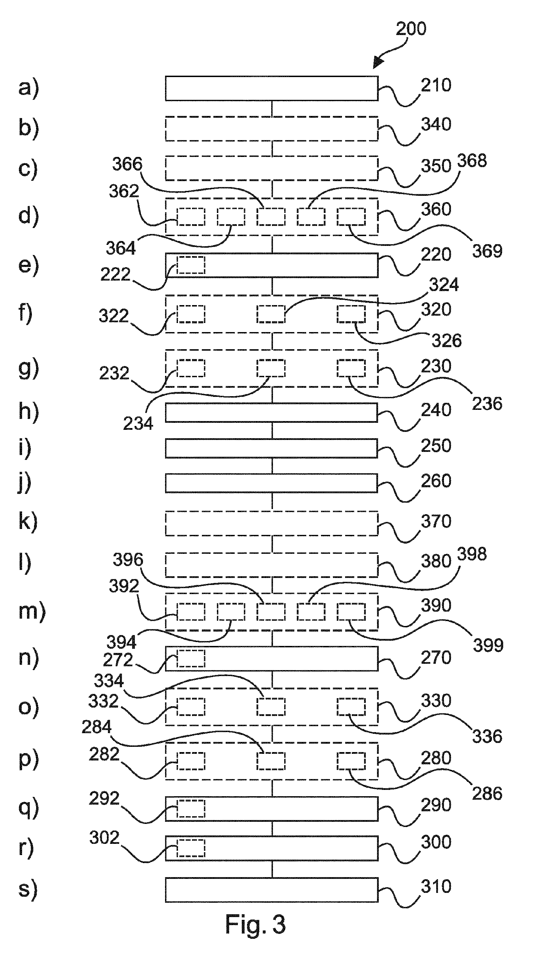

Fig. 3 shows a method 200 for white balance correction in its basic steps. The method comprises:

in a providing step 210, also referred to as step a), a first image of at least one image is provided;
in a determining step 220, also referred to as step e), a region of interest within the first image is determined;
in a determining step 240, also referred to as step h), a first green to red parameter (1GR) is determined on the basis of pixel values within the region of interest within the first image;
in a determining step 250, also referred to as step i), a first green to blue parameter (1GB) is determined on the basis of pixel values within the region of interest within the first image;
in a providing step 260, also referred to as step j), a second image of the at least one image is provided, the second image acquired at a different time to a time of acquisition of the first image;
in a determining step 270, also referred to as step n), a region of interest within the second image is determined;
in a determining step 290, also referred to as step q), a second green to red parameter (2GR) is determined on the basis of pixel values within the region of interest within the first image and within the region of interest within the second image;
in a determining step 300, also referred to as step r), a second green to blue parameter (2GB) is determined on the basis of pixel values within the region of interest within the first image and within the region of interest within the second image; and
in a determining step 310, also referred to as step s), a white balance correction is determined on the basis of: the first green to red parameter; and the first green to blue parameter; and the second green to red parameter; and the second green to blue parameter.

According to an example, the method comprises:

in a determining step 230, also referred to as step g), an average value is determined for a distribution of the colour red within the region of interest within the first image, and an average value is determined for a distribution of the colour blue within the region of interest within the first image, and an average value is determined for a distribution of the colour green within the region of interest within the first image;

wherein step h) comprises determining the first green to red parameter (1GR) as a function of the average value for the distribution of the colour green within the region of interest within the first image and the average value for the distribution of the colour red within the region of interest within the first image;

wherein step i) comprises determining the first green to blue parameter (1GB) as a function of the average value for the distribution of the colour green within the region of interest within the first image and the average value for the distribution of the colour blue within the region of interest within the first image;

in a determining step 280, also referred to as step p), an average value is determined for a distribution of the colour red within the region of interest within the second image, and an average value is determined for a distribution of the colour blue within the region of interest within the second image, and an average value is determined for a distribution of the colour green within the region of interest within the second image;

wherein step q) comprises determining the second green to red parameter (2GR) as a function of the average value for the distribution of the colour green within the region of interest within the first image and the average value for the distribution of the colour red within the region of interest within the first image and the average value for the distribution of the colour green within the region of interest within the second image and the average value for a distribution of the colour red within the region of interest within the second image; and

wherein step r) comprises determining the second green to blue parameter (2GB) as a function of the average value for the distribution of the colour green within the region of interest within the first image and the average value for the distribution of the colour blue within the region of interest within the first image and the average value for the distribution of the colour green within the region of interest within the second image and the average value for a distribution of the colour blue within the region of interest within the second image.

According to an example, step h) comprises determining the first green to red parameter (1GR) as a function of the ratio between the average value for the distribution of the colour green within the region of interest within the first image and the average value for the distribution of the colour red within the region of interest within the first image, and step i) comprises determining the first green to blue parameter (1GB) as a function of the ratio between the average value for the distribution of the colour green within the region of interest within the first image and the average value for the distribution of the colour blue within the region of interest within the first image.

In an example, the white balance correction comprises a green to red ratio correction determined on the basis of the first green to red parameter and the second green to red parameter, and wherein the white balance correction comprises a green to blue ratio correction determined on the basis of the first green to blue parameter and the second green to blue parameter.

In an example, step q) comprises determining 292 the second green to red parameter as a function of the ratio of a first value to a second value, wherein the first value is calculated as the sum of the average value for the distribution of the colour green within the region of interest within the second image plus the average value for the distribution of the colour red within the region of interest within the first image minus the average value for the distribution of the colour green within the region of interest within the first image minus the average value for the distribution of the colour red within the region of interest within the second image, and wherein the second value is calculated as the sum of the average value for the distribution of the colour red within the region of interest within the first image and the average value for the distribution of the colour red within the region of interest within the second image; and wherein step r) comprises determining 302 the second green to blue ratio as a function of the ratio of a third value to a fourth value, wherein the third value is calculated as the sum of the average value for the distribution of the colour green within the region of interest within the second image plus the average value for the distribution of the colour blue within the region of interest within the first image minus the average value for the distribution of the colour green within the region of interest within the first image minus the average value for the distribution of the colour blue within the region of interest within the second image, and wherein the fourth value is calculated as the sum of the average value for the distribution of the colour blue within the region of interest within the first image and the average value for the distribution of the colour blue within the region of interest within the second image.

In an example, the green to red ratio correction is equal to the value 1 + 1 GR + 2GR; and wherein the green to blue ratio correction is equal to the value 1 + 1 GB + 2GB.

In an example, the method comprises a determining step 320, also referred to as step f), wherein step f) comprises determining 322 whether there are a plurality of Lombs of the colour red within the region of interest within the first image, and wherein step g) comprises determining 232 the average value for the distribution of the colour red for a predominant Lomb of the plurality of Lombs; and/or step f) comprises determining 324 whether there are a plurality of Lombs of the colour blue within the region of interest within the first image and wherein step g) comprises determining 234 the average value for the distribution of the colour blue for a predominant Lomb of the plurality of Lombs; and/or step f) comprises determining 326 whether there are a plurality of Lombs of the colour green within the region of interest within the first image and wherein step g) comprises determining 236 the average value for the distribution of the colour green for a predominant Lomb of the plurality of Lombs.

In an example, the method comprises a determining step 330, also referred to as step o),wherein step o) comprises determining 332 whether there are a plurality of Lombs of the colour red within the region of interest within the second image and wherein step p) comprises determining 282 the average value for the distribution of the colour red for a predominant Lomb of the plurality of Lombs; and/or step o) comprises determining 334 whether there are a plurality of Lombs of the colour blue within the region of interest within the second image and wherein step p) comprises determining 284 the average value for the distribution of the colour blue for a predominant Lomb of the plurality of Lombs; and/or step o) comprises determining 336 whether there are a plurality of Lombs of the colour green within the region of interest within the second image and wherein step p) comprises determining 286 the average value for the distribution of the colour green for a predominant Lomb of the plurality of Lombs.

In an example, the method comprises a determining step 340, also referred to as step b), wherein step b) involves determining a global region within the first image and sub-dividing the global region into a plurality of sub-regions; and the method comprises a determining step 350, also referred to as step c), wherein step c) involves determining an average value for a distribution of the colour red within each of the plurality of sub-regions within the first image, and an average value for a distribution of the colour blue within each of the plurality of sub-regions within the first image, and an average value for a distribution of the colour green within each of the plurality of sub-regions within the first image; and the method comprises a using step 360, also referred to as step d), wherein step d) involves using the average value for the distribution of the colour red within each of the plurality of sub-regions within the first image and the average value for a distribution of the colour blue within each of the plurality of sub-regions within the first image and the average value for the distribution of the colour green within each of the plurality of sub-regions within the first image to determine if any of the plurality of sub-regions are outlier regions, and wherein step e) comprises determining 222 the region of interest in the first image as the plurality of sub-regions in the first image minus the outlier regions in the first image.

In an example, step d) comprises: d1) determining 362 a first green to red parameter for each of the plurality of sub-regions within the first image as a function of the ratio between the average value for the distribution of the colour green within each of the plurality of sub-regions within the region of interest within the first image and the average value for the distribution of the colour red within the corresponding each of the plurality of sub-regions the region of interest within the first image, and step d) further comprises: d2) determining 364 a first green to blue parameter for each of the plurality of sub-regions within the first image as a function of the ratio between the average value for the distribution of the colour green within each of the plurality of sub-regions within the region of interest within the first image and the average value for the distribution of the colour blue within the corresponding each of the plurality of sub-regions the region of interest within the first image, and step d) further comprises: d3) determining 366 an average value and standard deviation for the plurality of first green to red parameters, and step d) further comprises d4) determining 368 an average value and standard deviation for the plurality of first green to blue parameters, and wherein step d) comprises using 369 the average values and standard deviations to determine if any of the plurality of sub-regions are outlier regions.

In an example, the method comprises a determining step 370, also referred to as step k), wherein step k) involves determining a global region within the second image and sub-dividing the global region into a plurality of sub-regions; and the method comprises a determining step 380, also referred to as step 1), wherein step 1) involves determining an average value for a distribution of the colour red within each of the plurality of sub-regions within the second image, and an average value for a distribution of the colour blue within each of the plurality of sub-regions within the second image, and an average value for a distribution of the colour green within each of the plurality of sub-regions within the second image; and the method comprises a using step 390, also referred to as step m), wherein step m) involves using the average value for the distribution of the colour red within each of the plurality of sub-regions within the second image and the average value for a distribution of the colour blue within each of the plurality of sub-regions within the second image and the average value for the distribution of the colour green within each of the plurality of sub-regions within the second image to determine if any of the plurality of sub-regions are outlier regions, and wherein step n) comprises determining 272 the region of interest in the first image as the plurality of sub-regions in the first image minus the outlier regions in the first image.

In an example, step m) comprises: m1) determining 392 a first green to red parameter for each of the plurality of sub-regions within the second image as a function of the ratio between the average value for the distribution of the colour green within each of the plurality of sub-regions within the region of interest within the second image and the average value for the distribution of the colour red within the corresponding each of the plurality of sub-regions the region of interest within the second image, and m2) determining 394 a first green to blue parameter for each of the plurality of sub-regions within the second image as a function of the ratio between the average value for the distribution of the colour green within each of the plurality of sub-regions within the region of interest within the second image and the average value for the distribution of the colour blue within the corresponding each of the plurality of sub-regions the region of interest within the second image, and m3) determining 396 an average value and standard deviation for the plurality of first green to red parameters and m4) determining 398 an average value and standard deviation for the plurality of first green to blue parameters, and wherein step m) comprises using 399 the average values and standard deviations to determine if any of the plurality of sub-regions are outlier regions.

In an example of the method, the region of interest within the first image extends over substantially the same pixel positions as the region of interest within the second image.

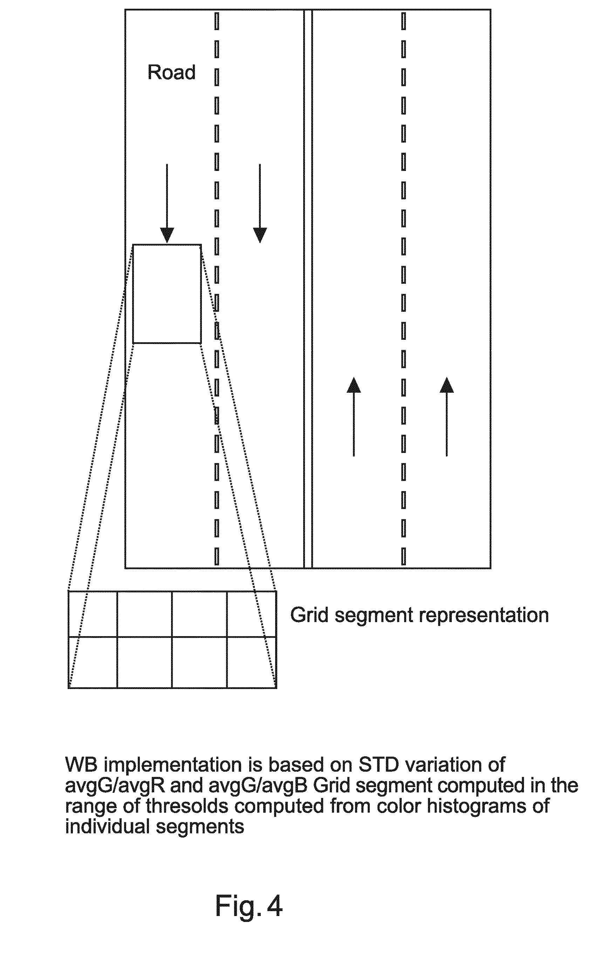

Examples of the device, system and method for white balance correction will now be described in more detail in conjunction with Figs. 4-8.

Fig. 4 shows a region of the road surface being imaged by a camera housed in a car. The region of the road surface being imaged is used as part of white balance computation. A road surface can be considered to generally form a good image scene to provide for white balance computation because it is frequently assumed to have a constant colour (grey), and to be illuminated uniformly with my sunlight or night-time illumination. However, in reality the chosen image scene can have road colour variation due to many reasons such as Lane sign presents as well as patches on the road filling potholes, patches of mud et cetera. Furthermore, the chosen image scene can be illuminated by multiple light sources, such as various streetlights, sunlight, and rear and front lighting from other cars. Thus, white balance correction has to contend not only with a nonuniform road surface but with nonuniform nonwhite light sources, such as red colour brake lighting and yellow sodium street lighting. The device, system and method for white balance correction addresses these issues, which can be classified into two main issue types: 1. road nonuniformity conditions causing the computation of erroneous white balance; 2. different illumination condition attributes causing computation of erroneous white balance.

The device, system and method in effect uses a history based grid segmented color histogram computation and processing approach, which addresses the problem of non uniformity of road and computation of white balance ratios, and compensates for the change in illumination conditions.

The processing of the current methodology is divided in four main processing blocks;

1) Grid Creation
2) Histogram processing
3) Grid based decision making
4) History based decision making

A parametric model of white balance correction has the following inputs: scene / ROI history information; white balance ROI non-uniformity; change in illumination condition; motion of vehicle; frame rate of camera. An output of the parametric model is a corrected white balance ratio.

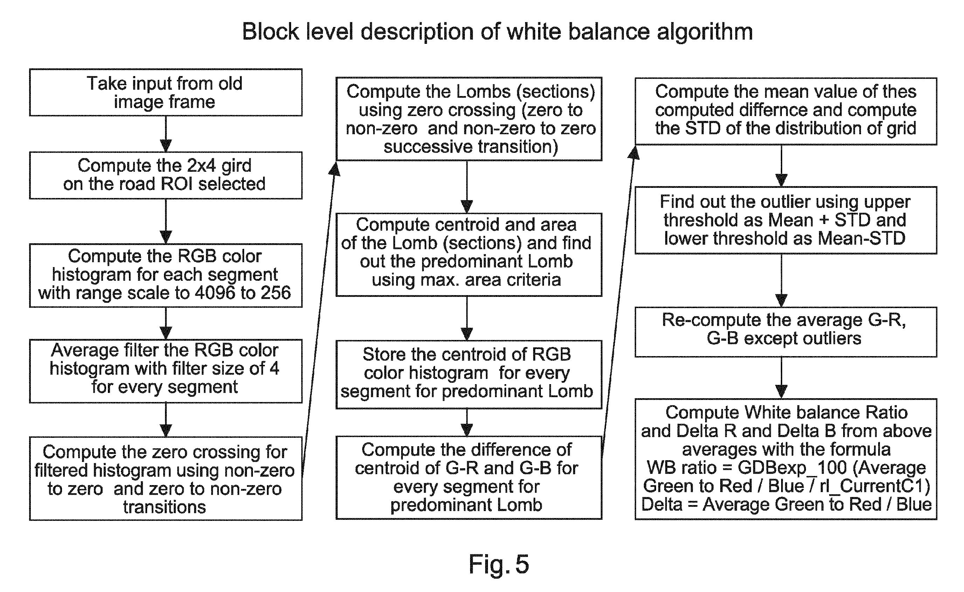

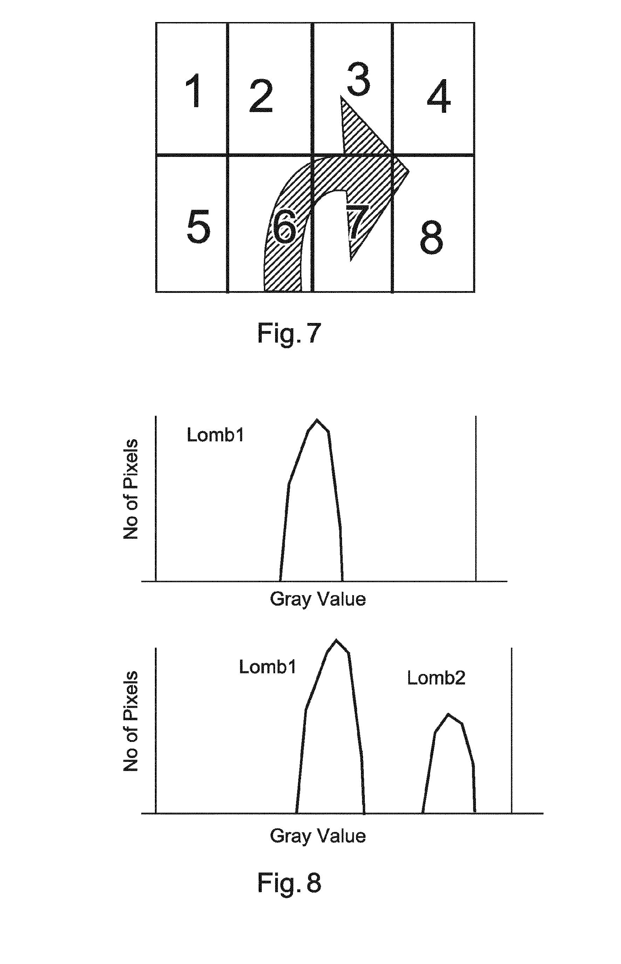

Fig. 5 shows a detailed flow of operation. An image scene is divided into 8 subsections (the scene can be divided into other numbers of subsections) and the red green and blue colour histograms are calculated for each subsection (or segment). Frequently there will be only one distribution (Lomb) for each colour within each subsection. However, as is discussed below with respect to figs. 7-8, they can be more than one Lomb in a segment for a colour. Therefore, the predominant Lomb for a colour is selected if there is more than one Lomb for the colour. It is then determined if any of the segments can be considered to be outliers, in terms of having a distribution of colour (red, green, blue) that is statistically different to that for her segments. Segments that are outliers are then not considered in the processing that leads to a white balance correction. In the last box of the detailed flow, describes function GDBexp_100 function in the block diagram. This is an exponential function (e^(avg color difference/ constant)) and the "100" represents two decimal point accuracy. This enables use of camera systems that exhibit both linear and logarithmic response behaviours. However, the WB ratio can equal a function of (Average Green to Red / Blue/rl_CurrentC1). Also, a last step, not shown in Fig 5, can be to check that the computed WB ratio and Delta is in range (skip condition) and if yes the new value is taken, but if not the previous WB ratio and Delta value is used.

In the following, more detail is provided regarding the above described processing methodology.

<u>Mathematical representation of the problem</u>

The basic white balance problem is to correct the white balance of the image captured due to changes in the illumination conditions. Basically one needs to correct the white balance of an image for the road scene to appear as if illuminated with white light whilst the road scene may actually be illuminated with non-white light sources like Red color braking lights of preceding vehicles that illuminate the road scene or sodium street lighting that illuminates the road scene.

Basic Assumptions

1. The road region of interest (ROI) under consideration is expected to have constant gray value i.e. ROI = f(R, G, B) has Avg R= Avg G = Avg B with this considered to define a "white point" for the computation of dynamic white balance.
2. Thus the ratios of (Avg G / Avg R) = (Avg G / Avg B) = 1.
3. However, there might be situation where the chosen road ROI does not obey the criteria of Avg R = Avg G = Avg B, which is considered as the case like there being a muddy road, a road covered with sand, a road surface in a parking area with tiles or road markings with different colours etc.
4. The Road ROI viewed in consecutive frames of videos does not abruptly vary, such as changing suddenly from a gray to a red patch.

    a. Except a corner case like a shadow of a tree on the road or suddenly transitioning from a muddy road to normal road.

For the special case where chosen ROI is not grey, an offline training classifier can be used to identify the type of road ROI itself, into the following types:

- Grey Road ROI

  ○ No obvious artifact Gray Road ROI
  ○ Obvious Road Gray ROI

- Non Grey ROI

  ○ Muddy Road ROI

    ○ Red Muddy color ROI
    ■ Brown Muddy color ROI
    ■ Black Muddy color ROI

  ○ Roads ROI full of sand
  ○ Parking space tile based ROI

    ■ Dominant Blue tile ROI
    ■ Dominant Red tile ROI
    ■ Dominant Green tile ROI

  ○ Grass Road ROI

However for the case where assumption 4 holds true then for the consecutive frame ( history value) based method, the offline training is not required. A skip condition is implemented for transition case - the situation as described at 4a.
Therefore, taking into account assumption 3 above, considering the assumptions 1, 2 and 4 in reality the above equations (Avg G / Avg R) (Avg G / Avg B) are modified as now discussed, in order to provide a white balance correction.

Derivation of White Balance Correction Equations

Let R represent scene information, and Let ΔRoad represent an artifact that changes this scene information due to a non-uniformity factor relating to a grey road (the road being off grey due to mud/sand etc) and let Δillum represent an artifact that changes the scene information due to change in illumination condition, such as not white light illumination.
Thus, the

$$Road\ ROI = f(\ R \pm \Delta Road_R \pm \Delta illum_R, G \pm \Delta Road_G \pm \Delta illum_G, B \pm \Delta Road_B \\ \pm \Delta illum_B)$$

Where the R, G, and B subscripts relate to red, blue and green image channels (pixel values). Hence the above equation can be re written as

$$Road\ ROI = f(\ R \pm \Delta R, G \pm \Delta G, B \pm \Delta B)$$

In real time situations, we have the situation that

$$\pm \Delta R \neq \pm \Delta G \neq \pm \Delta B$$

Thus,

$$\frac{Avg\ (G \pm \Delta G)}{Avg(R \pm \Delta R)} \neq \frac{Avg\ (G \pm \Delta G)}{Avg(B \pm \Delta B)}$$

So, the problem can be modeled in two ways:

1. Estimate $\pm\Delta R$, $\pm\Delta G$, $\pm\Delta B$ and compute the Avg R, Avg G and Avg B by removing $\pm\Delta R$, $\pm\Delta G$, $\pm\Delta B$

2. Estimate the Avg R, Avg G and Avg B independently of $\pm\Delta R$, $\pm\Delta G$, $\pm\Delta B$

Now the approach 2 is considered for the analysis, however the following analysis enables the skilled person to carry out approach 1 too.

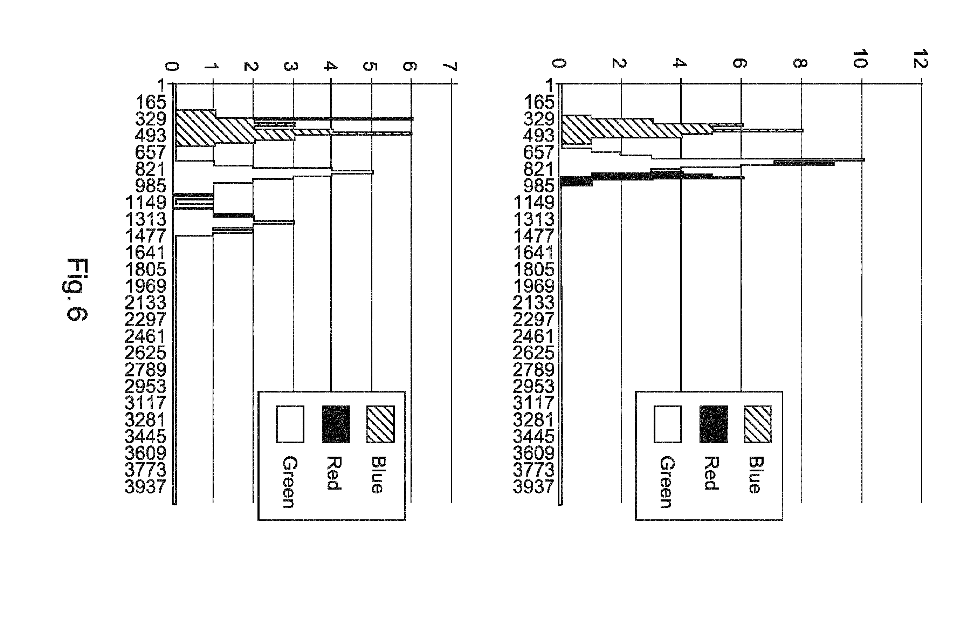

At this point it is helpful to introduce Fig. 6. Fig. 6 shows histograms of image data in red green and blue channels of a detector of the camera viewing the road ROI. The x-axis is a pixel value and the y-axis is the number of pixels having a particular pixel value. The upper histogram of Fig. 6 is for a road ROI that has no non-uniformity with three separate distributions, one for each colour. The lower histogram of fig 6 is for road ROI that has a non-uniformity, and now two green distributions are seen. The distributions here referred to as Lombs. This non-uniformity, leading to more than one distribution, is discussed in more detail with respect to Figs. 7 and 8.

So from Fig. 6 showing the color histograms can be seen that in the case of an obvious road non-uniformity, there will be two or more lombs of intensity that are created in the color histogram, whereas there will ideally be a single lomb for each colour distribution expected to be present in the case of a classical gray ROI without any obvious non uniformity. However, such a non-uniformity is taken into account by detecting the different distributions and only considering the predominant distribution (Lomb) for each colour channel. This improves the robustness of subsequent processing.

In the following discussion, a camera in a car that is moving forward has acquired one image (termed previous image) and then at a slightly later time the car has moved forward slightly and has acquired a second image (termed current image). Histograms, as shown in Fig. 6 I generated both of these images, and the predominant Lomb for each of the blue, red and green channels is determined. In other words, even when there is more than one Lomb for a colour, the histogram can affect considered to be as that shown in the upper histogram of Fig. 6. As shown in Fig. 4 an area of the image, which could be the whole image or part of the image selected by image processing, is segmented into 8 segments. The same area in each image is segmented, however this does not need to be the case where for example image processing is selecting the most appropriate region of the image to be segmented.

Now for each of the color histograms of Red, Green and Blue in each segment, a prominent (or predominant) lomb is selected as discussed above. Then, for each predominant lomb in a segment for each colour one can find the centroid of the lomb. The centroid of the Lomb, as a first measure, represents an average value estimation of the color distribution in that segment for a particular colour. The skilled person would appreciate that there are other ways of determining an average value for a colour distribution with a segment.

Therefore, from the two acquired images we have the following information.

$C_P^R$ Centroid of previous image Red color histogram value

$C_P^G$ Centroid of previous image Green color histogram value

$C_P^B$ Centroid of previous image Blue color histogram value

$C_C^R$ Centroid of current image Red color histogram value

$C_C^G$ Centroid of current image Green color histogram value

$C_C^B$ Centroid of current image Blue color histogram value

The superscript relates to the colour channel (red, green or blue), and the subscript relates to the image (previous or current).

To provide white balance correction we are trying to control the ratios of Avg G / Avg B and Avg G/ Avg R for intensity normalization.

Then, the different deviations from the scene are computed as:

$$\Delta_p^{GR} = C_p^G - C_p^R$$

$$\Delta_p^{GB} = C_p^G - C_p^B$$

$$\Delta_C^{GR} = C_C^G - C_C^R$$

$$\Delta_C^{GB} = C_C^G - C_C^R$$

And furthermore the change from the current and previous frame R, G, B colour can be written as

$$\Delta_{pC}^R = C_p^R - C_C^R$$

$$\Delta_{pC}^G = C_p^G - C_C^G$$

$$\Delta_{pC}^B = C_p^B - C_C^B$$

$$\Delta_{pc}^{GR} = \Delta_p^{GR} - \Delta_C^{GR}$$

$$\Delta_{pc}^{GB} = \Delta_p^{GB} - \Delta_C^{GB}$$

$$\Delta_{pc}^{GR} = \left(C_p^G - C_c^G\right) - \left(C_p^R - C_c^R\right) = \Delta_{pc}^G - \Delta_{pc}^R$$

$$\Delta_{pc}^{GB} = \left(C_p^G - C_c^G\right) - \left(C_p^B - C_c^B\right) = \Delta_{pc}^G - \Delta_{pc}^B$$

It is to be noted that from the assumption no 4 the values of $\Delta_{pc}^{GR}$ $\Delta_{pc}^{GB}$ are expected to be zero, except if there is a change in the illumination and can even have +/- sign based on the type of illumination. Thus this term can be used as a better white correction term to the above equation, and more accurate white balance ratios can be obtained with respect to the centroid based ratio measurement.

The Average R and Average B can be written as

$$Avg\ R = \frac{C_p^R + C_C^R}{2} \qquad Avg\ B = \frac{C_p^B + C_C^B}{2} \qquad Avg\ G = \frac{C_p^G + C_C^G}{2}$$

Now

$$Ratio_{GR} = \frac{Avg\ G}{Avg\ R}$$

$$Ratio_{GR} = \frac{\left(\frac{C_p^G + C_C^G}{2}\right)}{\left(\frac{C_p^R + C_C^R}{2}\right)}$$

And

$$\Delta_{pc}^{GR} = \left(C_p^G - C_C^G\right) - \left(C_p^R - C_C^R\right)$$

$$\left(C_p^G - C_C^G\right) = \Delta_{pc}^{GR} + \left(C_p^R - C_C^R\right)$$

$$\left(C_p^G - C_C^G\right) + 2 \times C_C^G = \Delta_{pc}^{GR} + \left(C_p^R - C_C^R\right) + 2 \times C_C^G$$

$$\left(C_p^G + C_C^G\right) = \Delta_{pc}^{GR} + \left(C_p^R - C_C^R\right) + 2 \times C_C^G$$

$$Avg\ G = \frac{C_p^G + C_C^G}{2} = \frac{\Delta_{pc}^{GR} + \left(C_p^R - C_C^R\right) + 2 \times C_C^G}{2}$$

$$Avg\ G = \frac{\Delta_{pc}^{GR} + \left(C_p^R - C_C^R\right)}{2} + C_C^G$$

$$Avg\ G = \frac{\Delta_{pc}^{GR}}{2} + \frac{\left(C_p^R - C_C^R\right)}{2} + C_C^G$$

$$\frac{Avg\ G}{Avg\ R} = \frac{\frac{\Delta_{pc}^{GR}}{2} + \frac{\left(C_p^R - C_C^R\right)}{2} + C_C^G}{\frac{\left(C_p^R + C_C^R\right)}{2}}$$

$$\frac{Avg\ G}{Avg\ R} = 1 + \frac{\Delta_{pc}^{GR}}{\left(C_p^R + C_C^R\right)} + \frac{\frac{\left(C_p^R - C_C^R\right)}{2}}{\frac{\left(C_p^R + C_C^R\right)}{2}} + \frac{C_C^G}{\frac{\left(C_p^R + C_C^R\right)}{2}}$$

As

$$\frac{\frac{(C_p^R - C_C^R)}{2}}{\frac{(C_p^R + C_C^R)}{2}} = \frac{(C_p^R - C_C^R)}{(C_p^R + C_C^R)} \approx 0 \ and \ \frac{(C_p^R + C_C^R)}{2} \approx C_C^R$$

$$Ratio_{GR} = \frac{Avg\ G}{Avg\ R} = 1 + \frac{\Delta_{pc}^{GR}}{(C_p^R + C_C^R)} + \frac{C_C^G}{C_C^R}$$

as $C_p^R \approx C_C^R$ in case of Road

Thus the Ratio GR can be written in the term of centroid ratio as

$$Ratio_{GR\ Centroid} = \frac{C_C^G}{C_C^R}$$

Thus written in two forms, white balance correction can be written as:

$$Ratio_{GR} = 1 + \frac{\Delta_{pc}^{GR}}{(C_p^R + C_C^R)} + Ratio_{GR\ Centroid}$$

or

$$Ratio_{GR} = \frac{Avg\ G}{Avg\ R} = 1 + \frac{\Delta_{pc}^{GR}}{(C_p^R + C_C^R)} + \frac{C_C^G}{C_C^R}$$

Thus the correction term for more accurate white balance need to be applied for Ratio GR with centroid ratio is

$$Corection\ to\ Ratio_{GR} = 1 + \frac{\Delta_{pc}^{GR}}{(C_p^R + C_C^R)}$$

Similarly the correction term for more accurate white balance for Ratio GB applied with centroid ratio is:

$$Ratio_{GB} = 1 + \frac{\Delta_{pc}^{GB}}{(C_p^B + C_C^B)} + Ratio_{GB\ Centroid}$$

or

$$Ratio_{GB} = \frac{Avg\ G}{Avg\ B} = 1 + \frac{\Delta_{pc}^{GB}}{(C_p^B + C_C^B)} + \frac{C_C^G}{C_C^B}$$

Thus,

17

$$Corection\ to\ Ratio_{GB} = 1 + \frac{\Delta_{pc}^{GB}}{(C_p^B + C_c^B)}$$

In this manner, the gain levels on the R, G, and B channels of the camera can be dynamically adjusted from the above calculated RatioGR and RatioGB, in order that the camera is dynamically corrected for white balance.

Thus, this kind of history value based approach combined with grid based predominant lomb based centroid white balance computation, the following enhancements are provided:

1. The white balance computation will be free from road non-uniformities because of the predominant lomb based centroid computation method.

2. The non-obvious non-uniformity of the Road ROI because of grid segment based comparison of the ratio computed among the segments.

3. It will also handle special Road ROI color case (i.e. muddy road, tiles in parking etc.) because of history method as assumption -4 held true.

4. This approach also can expect to give out of range estimation kind for a change in R,G,B from previous and current frames, in case of transition problem and can be used to write skip logic condition for those cases.

5. This kind of computation can address the white balance computation due to change in illumination condition.

Regarding assumption-4

- Frame rate analysis of distance between the consecutive frames -
- Let's say vehicle moves with max speed of 250 km/hour
- Speed of vehicle in meter / sec will be = 250 * 1000/ 3600 = 69.5 meter/ sec
- For ADAS camera typical frame rate is 15 frames per second then
- Between the frame distance covered = 69.5 / 15 = 4.7 meters
- For an average speed of 90 km/hour speed the distance between the two frames covered is 1.67 meters. Thus a computation distance as detailed here can be used to determine, if an abrupt transition in illumination has occurred, thereby enabling those image frames to be discarded or skipped if necessary.

Usage of histogram processing for computation of dynamic white balance -

Histogram of an image represents the distribution of count of pixels with respect to the value at the pixel. The histogram has x axis as grey level and y axis as number of pixels at the particular grey level. Thus, in case of color image with RGB (Red/Green/Blue) image sensor of the present camera, there are three color histograms R color histogram, G color histogram and B color histogram. The usage of color histograms is used for the computation of white balance ratios. The most common modified gray world algorithm used to compute white balance computation, uses the philosophy that the ratio of average value of Green/ Blue or Green/ Red should be equal for reference white/gray points chosen in the scene. As mentioned in our invention disclosure, the road region of interest (ROI) is chosen as reference white/gray object and is assumed to have predominantly gray color. This assumption implies R=G=B=constant for road ROI.

However, in the real world situation, this chosen road itself has various non-uniformities, which are addressed by the present device. The classical non-uniformities that can occur on road are road signs, debris on road, pot/mud holes, speed bumps etc. Now the first problem is to eliminate the effect of the non-uniformity of the road itself.

Notion of selection of predominant Lomb in histogram -

Now consider the road sign in road ROI, as shown in Fig. 7, where a road direction arrow is located within the image. A single colour histogram is taken for segment 1 of the image scene and is shown in the upper histogram of Fig. 8. A single colour histogram is taken for segment 6 of the image scene and is shown in the lower histogram of Fig. 8. The second small peak in the histogram is because of the sign information which has a higher gray value than for the color of the road sign (non-uniformity). Now, if we try to compute the centroid of the first histogram distribution profile (upper Fig. 8) Vs the second histogram distribution profile (lower fig. 8) as it is, the non-uniformity in Fig 2 will have an impact on the centroid estimation, as it will be altered due to the effect of the distribution of non-uniformities (lomb 2). This artifact is more dominant if the average is computed. The road marker in the above picture is white in nature but there are situations where road makers may have different colors, for eg. Yellow, but the effect is similar. This kind of color may have much more impact in the computation of average or centroid of the reference white/gray points. Therefore, the predominant lomb in the distribution is selected which is expected to represent the more accurate and realistic scene color distribution than considering the original distribution with non-uniformity.

Grid based decision making

Referring to Fig. 7, the centroid value of segment 7 may be much greater above than that for the other segments. This is a classic example of an outlier. In order to address this situation, the color centroid difference (Cg-Cr) and (Cg-Cb) is computed for all the segments and the standard deviation of the difference is computed. The outlier can be very easily indentified and eliminated from the range based logic (meaning average color centroid difference value +/- standard deviation (STD) of color centroid difference). A more accurate color ratio can be computed by eliminating the effect of outlier grid segments.

History based decision making

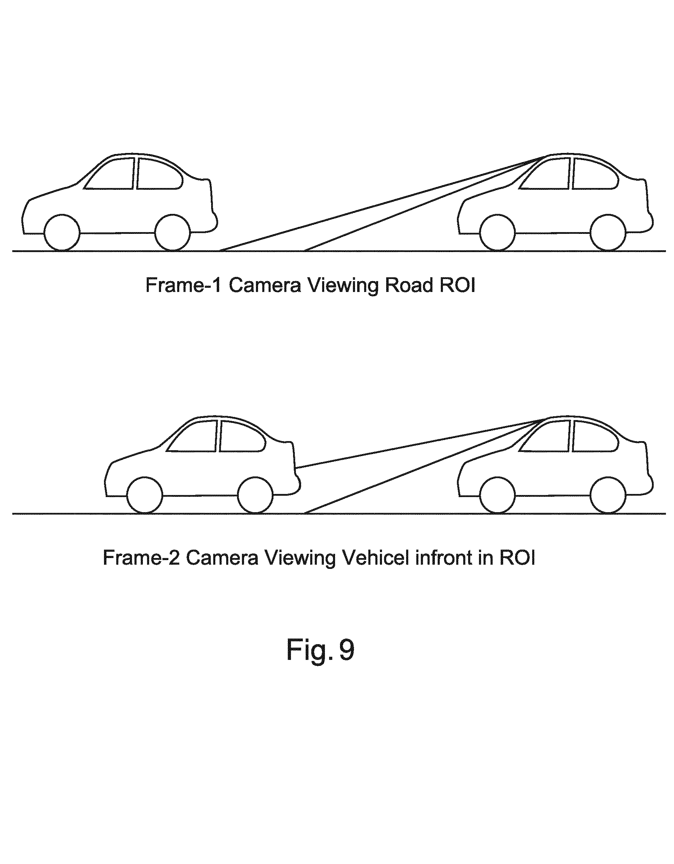

Referring to Fig. 9, the camera in frame-1 is viewing the road ROI. In the next frame (frame 2) the camera is partially viewing part of the vehicle in front, where the computed color ratios may change drastically depending on the color of vehicle in front. This is classic case where historical information can help to develop skip logic based on worst case white balance ratio computation.

If we consider the frame 0 (one frame before frame 1, and as such not shown in Fig. 9) the camera will be viewing the same road ROI and more accurate white balance ratio can be obtained using the derivation provided for computation of white balance ratio, as discussed above. This is based on the assumption that road characteristics do not change abruptly. So most of the road / scene non-uniformity cases can be handled to compute the while balance using road ROI as a reference white balance object. The disclosed history based method, with the derivation provided, gives an advantage of being robust to the effect of illumination changes.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

**1.** A device (10) for white balance correction, comprising:

- an input unit (20);
- a processing unit (30);

wherein, the input unit is configured to provide the processing unit with at least one image, the at least one image comprising a first image and a second image acquired at a different time to a time of acquisition of the first image;

wherein, the processing unit is configured to determine a region of interest within the first image;

wherein, the processing unit is configured to determine a first green to red parameter (1GR) on the basis of pixel values within the region of interest within the first image;

wherein, the processing unit is configured to determine a first green to blue parameter (1GB) on the basis of pixel values within the region of interest within the first image;

wherein, the processing unit is configured to determine a region of interest within the second image;

wherein, the processing unit is configured to determine a second green to red parameter (2GR) on the basis of pixel values within the region of interest within the first image and within the region of interest within the second image;

wherein, the processing unit is configured to determine a second green to blue parameter (2GB) on the basis of pixel values within the region of interest within the first image and within the region of interest within the second image; and

wherein, the processing unit is configured to determine a white balance correction on the basis of: the first green to red parameter; and the first green to blue parameter; and the second green to red parameter; and the second green to blue parameter.

2. Device (10) according to claim 1, wherein, the processing unit is configured to determine an average value for a distribution of the colour red within the region of interest within the first image, and to determine an average value for a distribution of the colour blue within the region of interest within the first image, and to determine an average value for a distribution of the colour green within the region of interest within the first image;

wherein, the processing unit is configured to determine the first green to red parameter (1GR) as a function of the average value for the distribution of the colour green within the region of interest within the first image and the average value for the distribution of the colour red within the region of interest within the first image;

wherein, the processing unit is configured to determine the first green to blue parameter (1GB) as a function of the average value for the distribution of the colour green within the region of interest within the first image and the average value for the distribution of the colour blue within the region of interest within the first image;

wherein, the processing unit is configured to determine an average value for a distribution of the colour red within the region of interest within the second image, and to determine an average value for a distribution of the colour blue within the region of interest within the second image, and to determine an average value for a distribution of the colour green within the region of interest within the second image;

wherein, the processing unit is configured to determine the second green to red parameter (2GR) as a function of the average value for the distribution of the colour green within the region of interest within the first image and the average value for the distribution of the colour red within the region of interest within the first image and the average value for the distribution of the colour green within the region of interest within the second image and the average value for a distribution of the colour red within the region of interest within the second image;

wherein, the processing unit is configured to determine the second green to blue parameter (2GB) as a function of the average value for the distribution of the colour green within the region of interest within the first image and the average value for the distribution of the colour blue within the region of interest within the first image and the average value for the distribution of the colour green within the region of interest within the second image and the average value for a distribution of the colour blue within the region of interest within the second image.

3. Device (10) according to claim 2, wherein, the processing unit is configured to determine the first green to red parameter (1GR) as a function of the ratio between the average value for the distribution of the colour green within the region of interest within the first image and the average value for the distribution of the colour red within the region of interest within the first image; and

wherein, the processing unit is configured to determine the first green to blue parameter (1GB) as a function of the ratio between the average value for the distribution of the colour green within the region of interest within the first image and the average value for the distribution of the colour blue within the region of interest within the first image.

4. Device according to any of claims 1-3, wherein the white balance correction comprises a green to red ratio correction determined on the basis of the first green to red parameter and the second green to red parameter, and wherein the white balance correction comprises a green to blue ratio correction determined on the basis of the first green to blue parameter and the second green to blue parameter.

5. Device according to any of claims 2-4, wherein the second green to red parameter is determined as a function of the ratio of a first value to a second value; wherein the first value is calculated as the sum of: the average value for the distribution of the colour green within the region of interest within the second image plus the average value for the distribution of the colour red within the region of interest within the first image minus the average value for the distribution of the colour green within the region of interest within the first image minus the average value for the distribution of the colour red within the region of interest within the second image; and wherein the second value is calculated as the sum of: the average value for the distribution of the colour red within the region of interest within the first image and the average value for the distribution of the colour red within the region of interest within the second image; and

wherein the second green to blue ratio is parameter is determined as a function of the ratio of a third value to a fourth value; wherein the third value is calculated as the sum of: the average value for the distribution of the colour green within the region of interest within the second image plus the average value for the distribution of the colour blue within the region of interest within the first image minus the average value for the distribution of the colour green within the region of interest within the first image minus the average value for the distribution of the colour blue within the region of interest within the second image; and wherein the fourth value is calculated as the sum of: the average value for the distribution of the colour blue within the region of interest within the first image and the average value for the distribution of the colour blue within the region of interest within the second image.

6. Device according to any of claims 2-5, wherein the processing unit (30) is configured to determine whether there are a plurality of Lombs of the colour red within the region of interest within the first image and wherein the processing unit is configured to determine the average value for the distribution of the colour red for a predominant Lomb of the plurality of Lombs; and/or wherein the processing unit is configured to determine whether there are a plurality of Lombs of the colour blue within the region of interest within the first image and wherein the processing unit is configured to determine the average value for the distribution of the colour blue for a predominant Lomb of the plurality of Lombs; and/or wherein the processing unit is configured to determine whether there are a plurality of Lombs of the colour green within the region of interest within the first image and wherein the processing unit is configured to determine the average value for the distribution of the colour green for a predominant Lomb of the plurality of Lombs.

7. Device according to any of claims 1-6, wherein the processing unit (30) is configured to determine a global region within the first image and configured to sub-divide the global region into a plurality of sub-regions; wherein, the processing unit is configured to determine an average value for a distribution of the colour red within each of the plurality of sub-regions within the first image, and to determine an average value for a distribution of the colour blue within each of the plurality of sub-regions within the first image, and to determine an average value for a distribution of the colour green within each of the plurality of sub-regions within the first image; and wherein, the processing unit is configured to use the average value for the distribution of the colour red within each of the plurality of sub-regions within the first image and/or the average value for a distribution of the colour blue within each of the plurality of sub-regions within the first image and/or the average value for the distribution of the colour green within each of the plurality of sub-regions within the first image to determine if any of the plurality of sub-regions are outlier regions, and wherein the processing unit is configured to determine the region of interest in the first image as the plurality of sub-regions in the first image minus the outlier regions in the first image.

8. Device according to any of claims 1-7, wherein the processing unit (30) is configured to determine a global region within the second image and configured to sub-divide the global region into a plurality of sub-regions; wherein, the processing unit is configured to determine an average value for a distribution of the colour red within each of the plurality of sub-regions within the second image, and to determine an average value for a distribution of the colour blue within each of the plurality of sub-regions within the second image, and to determine an average value for a distribution of the colour green within each of the plurality of sub-regions within the second image; and wherein, the processing unit is configured to use the average value for the distribution of the colour red within each of the plurality of sub-regions within the second image and/or the average value for a distribution of the colour blue within each of the plurality of sub-regions within the second image and/or the average value for the distribution of the colour green within each of the plurality of sub-regions within the second image to determine if any of the plurality of sub-regions are outlier regions, and wherein the processing unit is configured to determine the region of interest in the second image as the plurality of sub-regions in the second image minus the outlier regions in the second image.

9. Device according to any of claims 1-8, wherein the region of interest within the first image extends over substantially the same pixel positions as the region of interest within the second image.

10. Device according to any of claims 1-9, wherein the region of interest within the first image and the region of interest within the second image represent reference white point objects.

11. A system (100) for white balance correction, the system comprising:

- at least one camera (110); and
- a device (10) for white balance correction according to any one of the preceding claims;

wherein a camera (112) of the at least one camera is configured to acquire the at least one image; and
wherein, the processing unit (30) is configured to apply the white balance correction to the at least one camera.

12. A method (200) for white balance correction, comprising:

a) providing (210) a first image of at least one image;
e) determining (220) a region of interest within the first image;
h) determining (240) a first green to red parameter (1GR) on the basis of pixel values within the region of interest within the first image;
i) determining (250) a first green to blue parameter (1GB) on the basis of pixel values within the region of interest within the first image;
j) providing (260) a second image of the at least one image, the second image acquired at a different time to a time of acquisition of the first image;
n) determining (270) a region of interest within the second image;
q) determining (290) a second green to red parameter (2GR) on the basis of pixel values within the region of interest within the first image and within the region of interest within the second image;
r) determining (300) a second green to blue parameter (2GB) on the basis of pixel values within the region of interest within the first image and within the region of interest within the second image; and
s) determining (310) a white balance correction on the basis of: the first green to red parameter; and the first green to blue parameter; and the second green to red parameter; and the second green to blue parameter.

13. Method according to claim 12, comprising:

g) determining (230) an average value for a distribution of the colour red within the region of interest within the first image, and an average value for a distribution of the colour blue within the region of interest within the first image, and an average value for a distribution of the colour green within the region of interest within the first image;
wherein step h) comprises determining the first green to red parameter (1GR) as a function of the average value for the distribution of the colour green within the region of interest within the first image and the average value for the distribution of the colour red within the region of interest within the first image;
wherein step i) comprises determining the first green to blue parameter (1GB) as a function of the average value for the distribution of the colour green within the region of interest within the first image and the average value for the distribution of the colour blue within the region of interest within the first image;
p) determining (280) an average value for a distribution of the colour red within the region of interest within the second image, and an average value for a distribution of the colour blue within the region of interest within the second image, and an average value for a distribution of the colour green within the region of interest within the second image;
wherein step q) comprises determining the second green to red parameter (2GR) as a function of the average value for the distribution of the colour green within the region of interest within the first image and the average value for the distribution of the colour red within the region of interest within the first image and the average value for the distribution of the colour green within the region of interest within the second image and the average value for a distribution of the colour red within the region of interest within the second image; and
wherein step r) comprises determining the second green to blue parameter (2GB) as a function of the average value for the distribution of the colour green within the region of interest within the first image and the average value for the distribution of the colour blue within the region of interest within the first image and the average value for the distribution of the colour green within the region of interest within the second image and the average value for a distribution of the colour blue within the region of interest within the second image.

14. Method according to claim 13, comprising:

wherein step h) comprises determining the first green to red parameter (1GR) as a function of the ratio between the average value for the distribution of the colour green within the region of interest within the first image and the average value for the distribution of the colour red within the region of interest within the first image; and wherein step i) comprises determining the first green to blue parameter (1GB) as a function of the ratio between the average value for the distribution of the colour green within the region of interest within the first image and the average value for the distribution of the colour blue within the region of interest within the first image.

15. A computer program element for controlling an device according to any one of claims 1 to 10 and/or a system according to claim 11, which when executed by a processor is configured to carry out the method of any of claims 12-14.

Fig. 1

Fig. 2

Fig. 3

Road

Grid segment representation

WB implementation is based on STD variation of avgG/avgR and avgG/avgB Grid segment computed in the range of thresolds computed from color histograms of individual segments

Fig. 4

# Block level description of white balance algorithm

Fig. 5

Fig. 6

z

Frame-1 Camera Viewing Road ROI

Frame-2 Camera Viewing Vehicel infront in ROI

Fig. 9

Europäisches
Patentamt

European
Patent Office

Office européen
des brevets

# EUROPEAN SEARCH REPORT

Application Number

EP 16 19 1391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/184660 A1 (SKOW MICHAEL [US]) 2 October 2003 (2003-10-02) * paragraph [0038] - paragraph [0080]; figures 1-4 * | 1-4,9-15 | INV. H04N9/73 H04N1/60 |
| X | US 2003/151758 A1 (TAKESHITA TETSUYA [JP]) 14 August 2003 (2003-08-14) * paragraph [0046] - paragraph [0083]; figures 2-5 * | 1,4, 7-12,15 | |
| X | US 2011/157413 A1 (YOSHIDA TAKAHIKO [JP]) 30 June 2011 (2011-06-30) * paragraph [0045] - paragraph [0080]; figures 1-11 * | 1,4,9, 11,12,15 | |
| A | US 2016/140402 A1 (SMITH CASEY ARTHUR [US]) 19 May 2016 (2016-05-19) * paragraph [0021] - paragraph [0049]; figures 1-6B * | 1-15 | |
| | | | TECHNICAL FIELDS SEARCHED (IPC) G06T B60R H04N |

The present search report has been drawn up for all claims

| Place of search | Date of completion of the search | Examiner |
|---|---|---|
| Munich | 30 March 2017 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 1391

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2017

| Patent document cited in search report | | Publication date | Patent family member(s) | | Publication date |
|---|---|---|---|---|---|
| US 2003184660 | A1 | 02-10-2003 | NONE | | |
| US 2003151758 | A1 | 14-08-2003 | JP | 4314822 B2 | 19-08-2009 |
| | | | JP | 2003309859 A | 31-10-2003 |
| | | | US | 2003151758 A1 | 14-08-2003 |
| US 2011157413 | A1 | 30-06-2011 | NONE | | |
| US 2016140402 | A1 | 19-05-2016 | US | 2016140402 A1 | 19-05-2016 |
| | | | WO | 2016081240 A1 | 26-05-2016 |

EPO FORM P0459

For more details about this annex : see Official Journal of the European Patent Office, No. 12/82